# EUROPEAN PATENT APPLICATION

(11) **EP 4 579 904 A1**
(43) Date of publication of application: **02.07.2025**
(21) Application number: 23876500.2
(22) Date of filing: 21.09.2023
(51) Int. Cl.: H01M 50/172, H01M 50/186

(54) **ELECTROCHEMICAL APPARATUS AND ELECTRONIC APPARATUS**

(30) Priority: 13.10.2022 CN 202211253559
(71) Applicant: Ningde Amperex Technology Limited, Ningde, Fujian 352100 (CN)
(72) Inventor: LI, Xuecheng, Ningde, Fujian 352100 (CN); SU, Yisong, Ningde, Fujian 352100 (CN); WEN, Zhaodong, Ningde, Fujian 352100 (CN); LI, Beibei, Ningde, Fujian 352100 (CN)
(74) Representative: Icosa
(86) International application number: PCT/CN2023/120465
(87) International publication number: WO 2024/078295

(57) **Abstract**

An electrochemical apparatus and an electronic apparatus are provided. The electrochemical apparatus includes a housing, an electrode assembly, and a first conductive plate. The housing includes a main body portion and a sealing structure. The main body portion includes a first end wall and a second end wall opposite each other in a first direction, a first wall and a second wall opposite each other in a second direction, and a first side wall and a second side wall opposite each other in a third direction. The sealing structure includes a first sealing portion connected to the first end wall and a second sealing portion connected to the first side wall. The first sealing portion is folded in a direction towards a junction between the first wall and the first end wall, and/or the second sealing portion is folded in a direction towards a junction between the first wall and the first side wall. The first conductive plate includes a first surface facing the first wall and a second surface facing the second wall. An insulation adhesive connects the first conductive plate and the first sealing portion and includes a first layer connected to the first surface and a second layer connected to the second surface. A second region of the second layer overlaps with the first layer, and a first region extends beyond the first layer from the second region towards the electrode assembly.

## Description

### TECHNICAL FIELD

This application relates to the field of energy storage technologies, and in particular, to an electrochemical apparatus and an electronic apparatus including such electrochemical apparatus.

### BACKGROUND

With popularization of consumer electronic products such as notebook computers, mobile phones, handheld game consoles, tablet computers, mobile power supplies, drones, and electric vehicles, requirements for electrochemical apparatuses (for example, lithium-ion batteries) are increasingly stringent.

An electrochemical apparatus typically includes a housing, an electrode assembly disposed within the housing, and a conductive plate electrically connected to the electrode assembly and protruding out of the housing. When an electrochemical apparatus is subjected to mechanical abuse (such as dropping or rolling), stress concentration and thus fatigue fracture may occur at the conductive plate, leading to the failure of the electrochemical apparatus and affecting its safety, reliability, and service life.

### SUMMARY

In view of the deficiencies of the prior art, it is necessary to propose an electrochemical apparatus.

In addition, it is also necessary to provide an electronic apparatus including such electrochemical apparatus.

This application provides an electrochemical apparatus including a housing, an electrode assembly, and a first conductive plate. The housing includes a main body portion and a sealing structure connected to the main body portion. The electrode assembly is provided within the main body portion. The first conductive plate is electrically connected to the electrode assembly and protrudes out of the housing from the sealing structure. A direction in which the first conductive plate protrudes out of the electrode assembly is defined as a first direction, a thickness direction of the electrode assembly is defined as a second direction, and a direction perpendicular to the first direction and the second direction is defined as a third direction. The main body portion includes a first end wall and a second end wall disposed opposite each other in the first direction, a first wall and a second wall disposed opposite each other in the second direction, and a first side wall and a second side wall disposed opposite each other in the third direction. The sealing structure includes a first sealing portion connected to the first end wall and a second sealing portion connected to the first side wall, and the first conductive plate protrudes out of the housing from the first sealing portion. The first sealing portion is folded in a direction towards a first junction between the first wall and the first end wall, and/or the second sealing portion is folded in a direction towards a second junction between the first wall and the first side wall. The first conductive plate includes a first surface and a second surface disposed opposite each other in the second direction, where the first surface within the main body portion faces the first wall, and the second surface within the main body portion faces the second wall. The electrochemical apparatus further includes an insulation adhesive, where the insulation adhesive sealingly connects the first conductive plate and the first sealing portion. The insulation adhesive includes a first layer and a second layer, the first layer being connected to the first surface, and the second layer being connected to the second surface. The second layer includes a first region and a second region connected in the first direction. Viewed from the second direction, the second region overlaps with the first layer, and the first region extends beyond the first layer from the second region towards the electrode assembly.

Considering that the direction of fracture of the first conductive plate is consistent with the bending direction of the sealing structure, in this application, the second layer of the second surface covered by the insulation adhesive is extended, so that the second layer includes the first region that extends beyond the first layer in the first direction. When the electrochemical apparatus is subject to mechanical abuse causing movement of the electrode assembly within the housing, on the one hand, the first region that extends beyond the first layer is capable of preferentially dispersing at least a portion of the stress conducted towards the first conductive plate, alleviating the stress concentration issue at the lower edge of the first conductive plate in contact with the insulation adhesive, thereby reducing the risk of fatigue fracture of the first conductive plate under stress, and on the other hand, due to the extended first region covering the first conductive plate, the toughness of the first conductive plate can be further increased, thereby further reducing the risk of fatigue fracture of the first conductive plate under stress.

In some possible implementations, the electrode assembly includes a first electrode plate. The first electrode plate includes a first current collector and a first active material layer stacked, the first current collector including a blank zone uncovered by the first active material layer. The first conductive plate is welded to the blank zone, thereby increasing the connection strength of the first conductive plate.

In some possible implementations, the first region is separated from the first electrode plate in the first direction, thereby reducing the risk of affecting the capacity of the electrochemical apparatus by the first region covering a portion of the active material layer.

In some possible implementations, in the third direction, width W1 of the first region is smaller than width W2 of the second region, thereby reducing the waste of insulation material of the insulation adhesive caused when the width W1 is excessively large.

In some possible implementations, 2 mm ≤ W2 - W1 ≤ 5 mm. This can reduce the risk that the first region does not sufficiently cover the first conductive plate when the width W1 is excessively small and can also reduce the waste of the insulation material of the insulation adhesive caused when the width W1 is excessively large.

In some possible implementations, in the third direction, the first region includes a first side and a second side disposed opposite each other, a distance between the first side and the first conductive plate is L1, and a distance between the second side and the first conductive plate is L2, where 0.1 mm ≤ L1 ≤ 0.6 mm, and 0.1 mm ≤ L2 ≤ 0.6 mm. This can reduce the risk that the first region does not sufficiently cover the first conductive plate when the distances L1 and L2 are excessively small, and also reduce the waste of insulation material of the insulation adhesive caused when the distances L1 and L2 are excessively large.

In some possible implementations, in the third direction, the first region includes a first side and a second side disposed opposite each other, and the second region includes a third side connected to the first region, an arc angle being formed between the first side and the third side, and an arc angle being formed between the second side and the third side.

In some possible implementations, in the first direction, the first region has a length L0, where L0 ≥ 1 mm. This allows the second layer to extend beyond the first layer by a sufficient length, enabling the first region to better disperse at least a portion of the stress conducted towards the first conductive plate.

In some possible implementations, L0 ≤ 3 mm. To ensure a high energy density, the volume of the battery is limited, and unnecessary space is minimized. If L0 is excessively large, the first region covers the first electrode plate, increasing the thickness of the electrochemical apparatus and reducing the volumetric energy density.

This application further provides an electronic apparatus including a battery compartment and the electrochemical apparatus described above. The electrochemical apparatus is provided in the holding compartment. The electronic apparatus is powered by the electrochemical apparatus described above, and the risk of fracture of the first conductive plate in the electrochemical apparatus is reduced, thereby improving the safety, reliability, and service life.

### BRIEF DESCRIPTION OF DRAWINGS

FIG. 1 is a schematic structural diagram of an electrochemical apparatus according to an embodiment of this application.
FIG. 2 is a II-II cross-sectional view of the electrochemical apparatus shown in FIG. 1.
FIG. 3 is a III-III cross-sectional view of the electrochemical apparatus shown in FIG. 1.
FIG. 4 is a schematic structural diagram of an electrochemical apparatus according to some other embodiments.
FIG. 5 is a V-V cross-sectional view of the electrochemical apparatus shown in FIG. 4.
FIG. 6 is a VI-VI cross-sectional view of the electrochemical apparatus shown in FIG. 4.
FIG. 7 is a front view of a portion of a first electrode plate connected to a first conductive plate of the electrochemical apparatus shown in FIG. 2.
FIG. 8 is a side view of the first conductive plate shown in FIG. 7.
FIG. 9 is a schematic structural diagram of an electronic apparatus according to an embodiment of this application.
FIG. 10 is a cross-sectional view of the electronic apparatus shown in FIG. 9.

This application is further described in the following specific embodiments with reference to the accompanying drawings.

### DESCRIPTION OF EMBODIMENTS

The following clearly and detailly describes technical solutions in some embodiments of this application. Apparently, the described embodiments are some rather than all of the embodiments of this application. Unless otherwise defined, all technical and scientific terms used herein shall have the same meanings as commonly understood by those skilled in the art to which this application pertains. The terms used in the specification of this application are merely intended to describe specific embodiments rather than to limit this application.

The following describes the embodiments of this application in detail. However, this application may be embodied in many different implementations and should not be construed as being limited to the example embodiments set forth herein. Rather, these example embodiments are provided so that this application can be conveyed to persons skilled in the art thoroughly and in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more of the associated listed items. In addition, it should be understood that when an element A is referred to as being "connected to" an element B, the element A can be directly connected the element B or an intermediate element C may be present therebetween such that the element A and the element B are indirectly connected to each other.

Further, the use of "may" when describing embodiments of this application relates to "one or more embodiments of this application."

The terminology used herein is merely intended to describe specific embodiments rather than to limit this application. As used herein, the singular forms are intended to include the plural forms as well, unless the context clearly indicates otherwise. It should be further understood that the terms "comprise" or "include", when used in this specification, specify the presence of stated features, numbers, steps, operations, elements, and/or components but do not preclude the presence or addition of one or more other features, numbers, steps, operations, elements, components, and/or combinations thereof.

Spatial related terms such as "above" may be used herein for ease of description to describe the relationship between one element or feature and another element (a plurality of elements) or feature (a plurality of features) as illustrated in the figure. It should be understood that the spatial related terms are intended to include different orientations of a device or an apparatus in use or operation in addition to the orientations depicted in the figures. For example, if the device in the figures is turned over, elements described as "over" or "above" other elements or features would then be oriented "beneath" or "below" the other elements or features. Thus, the example term "above" may include both orientations of above and below. It should be understood that although the terms first, second, third, or the like may be used herein to describe various elements, components, zones, layers, and/or portions, these elements, components, zones, layers, and/or portions should not be limited by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of the example embodiments.

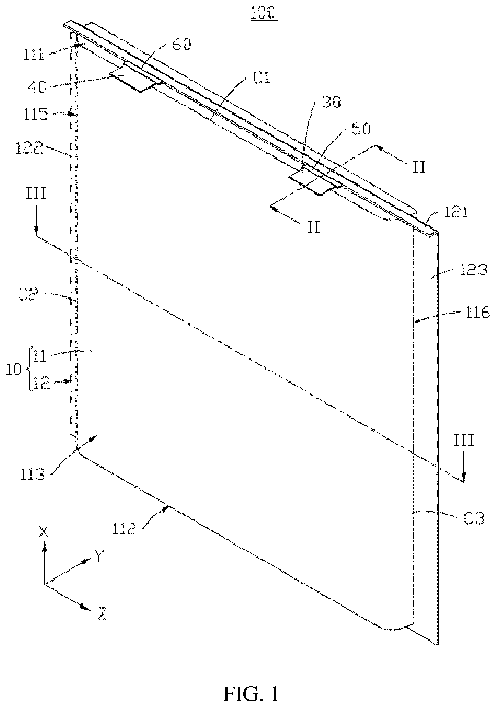

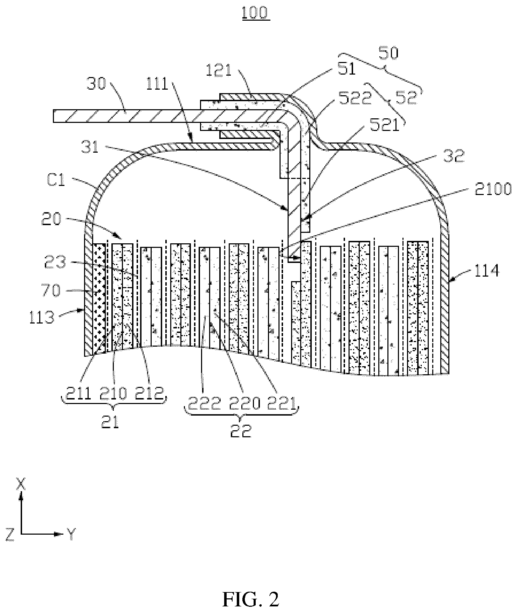

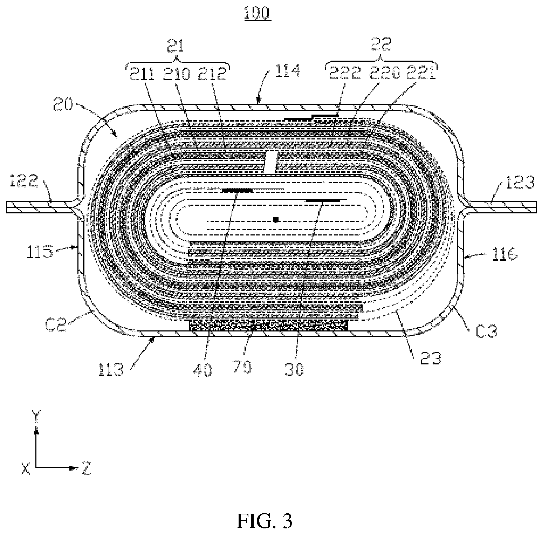

Referring to FIGs. 1 to 3, an embodiment of this application provides an electrochemical apparatus 100 including a housing 10, an electrode assembly 20, a first conductive plate 30, and a second conductive plate 40. The electrode assembly 20 is disposed within the housing 10. Both the first conductive plate 30 and the second conductive plate 40 are electrically connected to the electrode assembly 20 and protrude out of the housing 10. The first conductive plate 30 and the second conductive plate 40 may be connected to an external element (not shown in the figure). In some embodiments, the electrode assembly 20 can be a winding structure. Specifically, as shown in FIGs. 2 and 3, the electrode assembly 20 includes a first electrode plate 21, a second electrode plate 22, and a separator 23. The first electrode plate 21, the separator 23, and the second electrode plate 22 are sequentially stacked and wound. The separator 23 is configured to prevent direct contact between the first electrode plate 21 and the second electrode plate 22, thereby reducing the risk of short circuit of the electrode assembly 20. The first conductive plate 30 is electrically connected to the first electrode plate 21, and the second conductive plate 40 is electrically connected to the second electrode plate 22. In some other embodiments, the electrode assembly 20 may alternatively be of a stacked structure, that is, the first electrode plate 21, the separator 23, and the second electrode plate 22 are sequentially stacked.

The first electrode plate 21 includes a first active material layer 211, a first current collector 210, and a second active material layer 212 that are stacked. In some embodiments, the first current collector 210 includes a blank zone 2100 uncovered by the first active material layer 211. The first conductive plate 30 includes a first surface 31 and a second surface 32 disposed opposite each other, and the first conductive plate 30 is welded to the blank zone 2100 via the second surface 32, thereby increasing the connection strength between the first conductive plate 30 and the first current collector 210. The blank zone 2100 is a zone on the first current collector 210 where no first active material layer 211 is provided. The zone can be formed by applying the first active material layer 211 on the first current collector 210 and then cleaning off the first active material layer 211 corresponding to the blank zone 2100 to expose a portion of the first current collector 210, or can be formed by applying foam adhesive to the blank zone 2100, subsequently applying the first active material layer 211, and then heating the foam adhesive to remove the foam adhesive and the first active material layer 211 attached to the foam adhesive. In some other embodiments, the first conductive plate 30 can also be integrally formed with the first current collector 210 (that is, the first conductive plate 30 is formed by cutting the first current collector 210).

The second electrode plate 22 includes a third active material layer 221, a second current collector 220, and a fourth active material layer 222 that are stacked. The first active material layer 211 is opposite the third active material layer 221, and the second active material layer 212 is opposite the fourth active material layer 222. The second conductive plate 40 can be welded and fixed to the second current collector 220 or integrally formed with it. In some embodiments, the first electrode plate 21 is a negative electrode plate, and the second electrode plate 22 is a positive electrode plate. In some other embodiments, the first electrode plate 21 is a positive electrode plate, and the second electrode plate 22 is a negative electrode plate.

As shown in FIGs. 1 to 3, the housing 10 includes a main body portion 11 and a sealing structure 12. The electrode assembly 20 is provided within the main body portion 11. During the preparation of the housing 10, a packaging film can be folded in half, and a specified temperature and pressure are applied to the edge of the folded packaging film using the packaging head of a packaging device, to obtain the sealing structure 12. A direction in which the first conductive plate 30 or the second conductive plate 40 protrudes from the electrode assembly 20 (that is, a direction from the electrode assembly 20 to the first conductive plate 30 or the second conductive plate 40) is defined as a first direction X, a thickness direction of the electrode assembly 20 is defined as a second direction Y, a direction perpendicular to the first direction X and the second direction Y is defined as a third direction Z. The third direction Z is also a direction from the second conductive plate 40 to the first conductive plate 30.

The main body portion 11 includes a first end wall 111 and a second end wall 112 disposed opposite each other in the first direction X. The surface on which the first end wall 111 is located extends in the second direction Y and the third direction Z, and the surface on which the second end wall 112 is located extends in the second direction Y and the third direction Z. The main body portion 11 further includes a first wall 113 and a second wall 114 disposed opposite each other in the second direction Y. The surface on which the first wall 113 is located extends in the first direction X and the third direction Z, and the surface on which the second wall 114 is located extends in the first direction X and the third direction Z. The first wall 113 is connected between the first end wall 111 and the second end wall 112 in the first direction X, and the second wall 114 is connected between the first end wall 111 and the second end wall 112 in the first direction X. A first surface 31 of the first conductive plate 30 located within the main body portion 11 faces the first wall 113, and a second surface 32 of the first conductive plate 30 located within the main body portion 11 faces the second wall 114. The main body portion 11 further includes a first side wall 115 and a second side wall 116 disposed opposite each other in the third direction Z. A surface on which the first side wall 115 is located extends in the first direction X and the second direction Y, and a surface on which the second side wall 116 is located extends in the first direction X and the second direction Y. The first side wall 115 is connected between the first end wall 111 and the second end wall 112 in the first direction X, and the second side wall 116 is connected between the first end wall 111 and the second end wall 112 in the first direction X.

The sealing structure 12 includes a first sealing portion 121 connected to the first end wall 111 and a second sealing portion 122 connected to the first side wall 115, and both the first conductive plate 30 and the second conductive plate 40 protrude out of the housing 10 from the first sealing portion 121. In some embodiments, the sealing structure 12 may further include a third sealing portion 123 connected to the second side wall 116.

In this application, at least a portion of the sealing structure 12 is folded in a direction towards the first wall 113 to increase the space utilization and energy density of the electrochemical apparatus. As shown in FIGs. 1 to 3, in some embodiments, the first sealing portion 121 may be bent over the first end wall 111. Specifically, the first sealing portion 121 is folded in a direction towards a first junction C1 between the first wall 113 and the first end wall 111. In this case, the direction in which the first conductive plate 30 extends within the first sealing portion 121 changes, and the first direction X is a direction in which the first conductive plate 30 protrudes out of the electrode assembly 20 (that is, a direction from the electrode assembly 20 to the first conductive plate 30), or is a direction in which the first conductive plate 30 extends out of the first sealing portion 121 when the first sealing portion 121 is folded back to be perpendicular to the first end wall 111 (when the first sealing portion 121 is not folded). In this application, the first junction C1 is a position where the first wall 113 and the first end wall 111 are connected, and the first junction C1 can be an arc surface extending along the third direction Z as a whole or can be a straight line extending along the third direction Z.

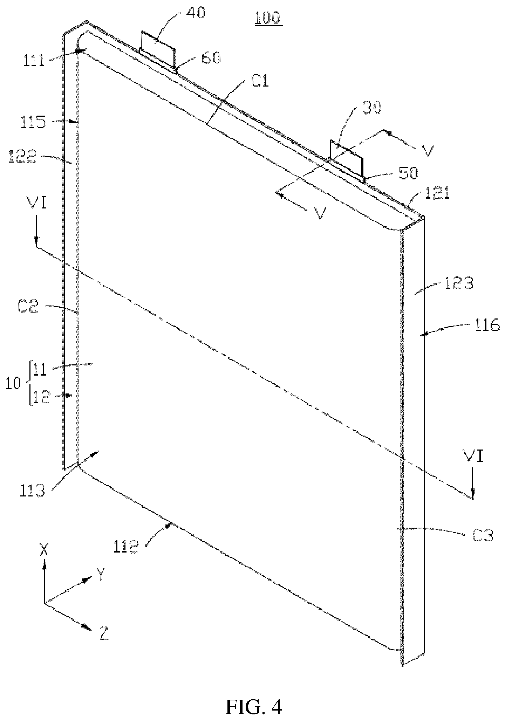

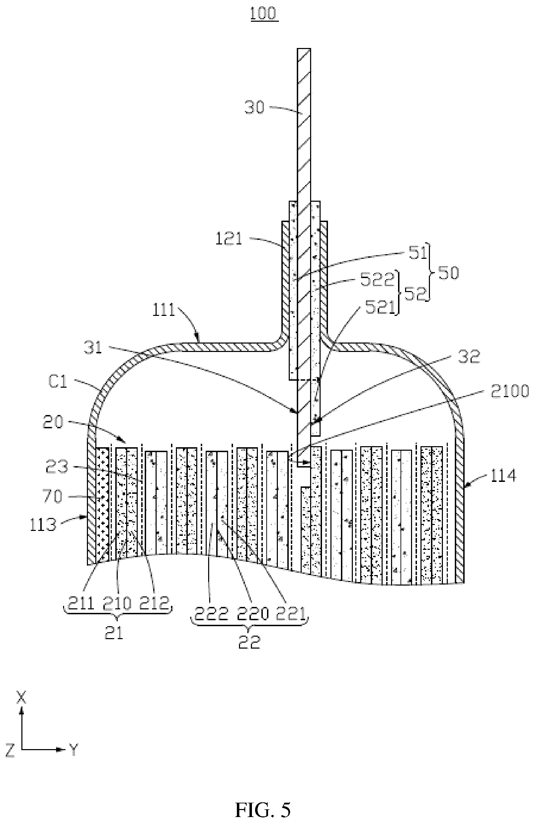

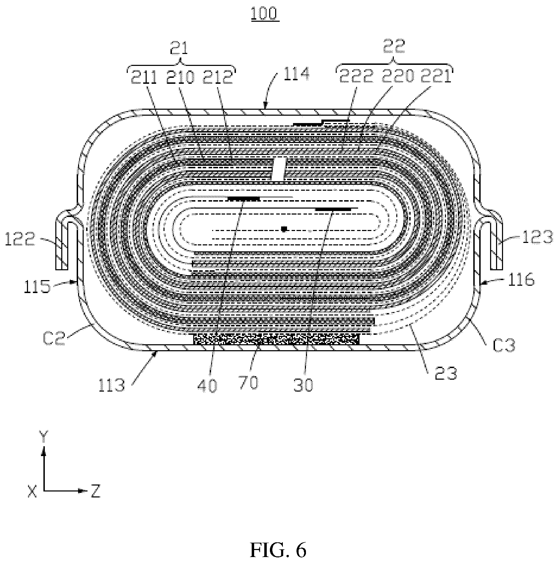

As shown in FIGs. 4 to 6, in other embodiments, the second sealing portion 122 may be bent over the first side wall 115, while the first sealing portion 121 does not need to be bent, thereby reducing the size of the electrochemical apparatus 100 in the third direction Z, and improving the space utilization and energy density. Specifically, the second sealing portion 122 is folded in a direction towards a second junction C2 between the first wall 113 and the first side wall 115. In this application, the second junction C2 is a position where the first wall 113 and the first side wall 115 are connected, and the second junction C2 can be an arc surface extending along the first direction X as a whole, or can be a straight line extending along the first direction X. When the sealing structure 12 further includes a third sealing portion 123, the third sealing portion 123 may also be folded in a direction towards the third junction C3 between the first wall 113 and the second side wall 116. In this application, the third junction C3 is a position where the first wall 113 and the second side wall 116 are connected, and the third junction C3 can be an arc surface extending in the first direction X as a whole or can be a straight line extending in the first direction X.

In other embodiments, the first sealing portion 121 is bent over the first end wall 111, and the second sealing portion 122 is bent over the first side wall 115, thereby reducing the size of the electrochemical apparatus 100 in both the first direction X and the third direction Z.

Referring to FIGs. 2, 7, and 8 together, the electrochemical apparatus 100 further includes a first insulation adhesive 50. The first insulation adhesive 50 sealingly connects the first conductive plate 30 and the first sealing portion 121, and can also maintain electrical insulation between the first conductive plate 30 and the housing 10. Specifically, the first insulation adhesive 50 fills any gap that may exist between the first conductive plate 30 and the first sealing portion 121, thereby sealingly connecting the first conductive plate 30 to the housing 10 and reducing the possibility of separation of the first conductive plate 30 from the first sealing portion 121 during subsequent use. In some embodiments, the material of the first insulation adhesive 50 is selected from at least one of polypropylene, polyethylene, polyethylene terephthalate, polyethylene naphthalene dicarboxylate, polypropylene-modified material, or polyethylene-modified material. As shown in FIG. 1, the electrochemical apparatus 100 may further include a second insulation adhesive 60. The second insulation adhesive 60 sealingly connects the second conductive plate 40 and the first sealing portion 121, and can also maintain electrical insulation between the second conductive plate 40 and the housing 10.

As shown in FIGs. 2, 7, and 8, the first insulation adhesive 50 includes a first layer 51 and a second layer 52. The first layer 51 is connected to the first surface 31, and the second layer 52 is connected to the second surface 32. When viewed from the second direction Y, the first layer 51 may be substantially rectangular and the second layer 52 may be substantially T-shaped. The second layer 52 includes a first region 521 and a second region 522 connected in the first direction X. When viewed from the second direction Y, the second region 522 overlaps with the first layer 51, and the first region 521 extends from the second region 522 towards the electrode assembly 20. That is, when viewed from the second direction Y, the second layer 52 extends beyond the first layer 51 from the region overlapping with the first layer 51 towards the electrode assembly 20.

In the prior art, the lower edge where the first conductive plate is in contact with the insulation adhesive is the starting position of their combination, which is prone to stress concentration. When the electrochemical apparatus is subjected to mechanical abuse, the electrode assembly may move within the housing, causing the first conductive plate to be pulled and thereby leading to stress conduction towards the first conductive plate. In addition, the lower edge where the first conductive plate is in contact with the insulation adhesive is particularly susceptible to stress concentration, making the first conductive plate prone to fatigue fracture under such stress. Moreover, through many experiments, the inventors of this application have found that the direction of fracture of the first conductive plate is consistent with the bending direction of the sealing structure. For example, when the sealing structure is bent towards the first wall, if mechanical abuse occurs, the first conductive plate typically fractures from the second surface towards the first surface under stress, that is, the second surface is the surface of the first conductive plate that starts to fracture under stress.

Therefore, in this application, the second layer 52 of the first insulation adhesive 50 covering the second surface 32 is extended, so that the second layer 52 includes the first region 521 that extends beyond the first layer 51 in the first direction X. When the electrochemical apparatus 100 is subject to mechanical abuse causing movement of the electrode assembly 20 within the housing 10, on the one hand, the first region 521 that extends beyond the first layer 51 is capable of preferentially dispersing at least a portion of the stress conducted towards the first conductive plate 30, alleviating the stress concentration issue at the lower edge of the first conductive plate 30 in contact with the first insulation adhesive 50, and thereby reducing the risk of fatigue fracture of the first conductive plate 30 under stress; and on the other hand, due to the extended first region 521 covering the first conductive plate 30, the area of the first conductive plate 30 covered by the first insulation adhesive 50 is improved, and therefore the toughness of the first conductive plate 30 can be further increased, thereby further reducing the risk of fatigue fracture of the first conductive plate 30 under stress. It can be understood that the second insulation adhesive 60 may also be designed with a structure similar to the first insulation adhesive 50 to reduce the risk of fatigue fracture of the second conductive plate 40 under stress.

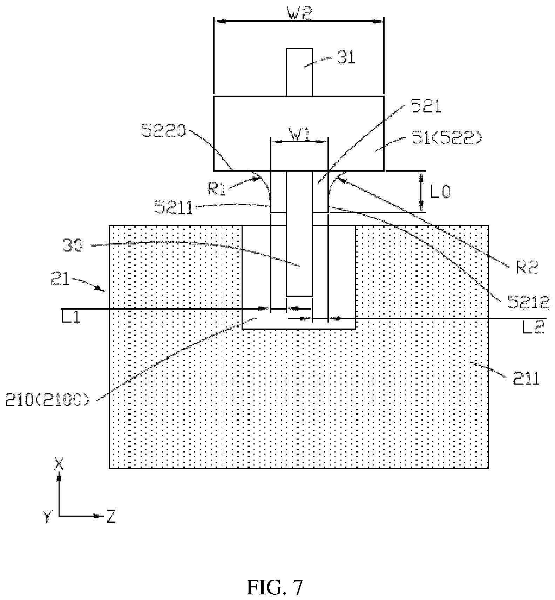

As shown in FIG. 7, the first region 521 is separated from the first electrode plate 21 along the first direction X. That is, when viewed from the second direction Y or the third direction Z, the first region 521 does not overlap with the first electrode plate 21, thereby reducing the risk of affecting the capacity of the electrochemical apparatus 100 by the first region 521 covering a portion of the active material layer.

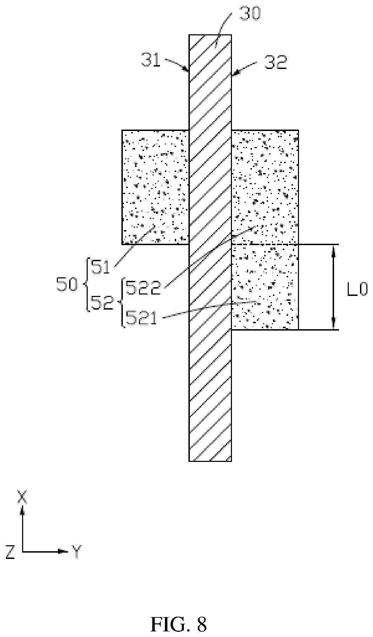

As shown in FIGs. 7 and 8, in some embodiments, in the first direction X, the first region 521 has a length L0, where L0 ≥ 1 mm, such that the second layer 52 can extend beyond the first layer 51 by a sufficient length, enabling the first region 521 to better disperse at least a portion of the stress conducted towards the first conductive plate 30. Further, the length L0 of the first region 521 may further be set to satisfy: 1 mm ≤ L0 ≤ 3 mm. To ensure a high energy density, the volume of the battery is limited, and unnecessary space is minimized. If L0 is excessively large, the first region 521 covers the first electrode plate 21, increasing the thickness of the electrochemical apparatus 100 and reducing the volumetric energy density.

As shown in FIG. 7, in some embodiments, in the third direction Z, width W1 of the first region 521 is smaller than width W2 of the second region 522, thereby reducing the waste of insulation material of the first insulation adhesive 50 caused when the width W1 of the first region 521 is excessively large. Further, it can be set that 2 mm ≤W2 - W1≤5 mm. For example, in some specific embodiments, W2 - W1 may be 2 mm, 3 mm, 4 mm, or 5 mm, or the like. This can reduce the risk that the first region 521 does not sufficiently cover the first conductive plate 30 when the width W1 is excessively small, and also reduce the waste of the insulation material of the first insulation adhesive 50 caused when the width W1 is excessively large.

As shown in FIG. 7, in some embodiments, in the third direction Z, the first region 521 includes a first side 5211 and a second side 5212 opposite each other. The distance between the first side 5211 and the first conductive plate 30 is L1, and the distance between the second side 5212 and the first conductive plate 30 is L2, where 0.1 mm ≤ L1 ≤ 0.6 mm and 0.1 mm ≤ L2 ≤ 0.6 mm. For example, in some specific embodiments, L1 and L2 may be 0.1 mm, 0.3 mm, 0.5 mm, or 0.6 mm, or the like. This can reduce the risk that the first region 521 does not sufficiently cover the first conductive plate 30 when the distances L1 and L2 are excessively small, and also reduce the waste of insulation material of the insulation adhesive 50 caused when the distances L1 and L2 are excessively large.

In some embodiments, the second region 522 includes a third side 5220 connected to the first region 521. The radius of the arc angle formed between the first side 5211 and the third side 5220 is R1, and the radius of the arc angle formed between the second side 5212 and the third side 5220 is R2, where 0 mm < R1 ≤ 0.05 mm, and 0 mm < R2 ≤ 0.05 mm. Providing the arc angles reduces the risk of stress concentration at the intersection of the first side 5211 and the third side 5220 and at the intersection of the second side 5212 and the third side 5220. Further, with the sizes of the radii R1 and R2 of the arc angles specified, the arc angles can reduce the risk of stress concentration at the intersection of the first side 5211 and the third side 5220 and at the intersection of the second side 5212 and the third side 5220. This can also reduce the risk that length L0 of the first region 521 is increased and thus a portion of the active material layer is covered when the radii R1 and R2 are excessively large.

As shown in FIGs. 2 and 3, in some embodiments, the electrochemical apparatus 100 further includes a bonding layer 70 disposed within the housing 10. The bonding layer 70 bonds the electrode assembly 20 and the first wall 113. The bonding layer 70 is used to secure the electrode assembly 20 to the housing 10, thereby reducing the occurrence of movement of the electrode assembly 20 within the housing 10 under mechanical abuse. In some embodiments, the material of the bonding layer 70 is selected from at least one of polypropylene, polyethylene, polyethylene terephthalate, polyethylene naphthalene dicarboxylate, polypropylene-modified material, or polyethylene-modified material. The bonding layer 70 may specifically be a double-sided adhesive or a hot melt adhesive. In some specific embodiments, the outermost layer of the electrode assembly 20 may be a separator 23. The bonding layer 70 bonds the separator 23 and the first wall 113.

The electrochemical apparatus 100 of this application may be any apparatus capable of undergoing an electrochemical reaction. Specifically, the electrochemical apparatus 100 includes all kinds of primary batteries, secondary batteries, fuel batteries, solar batteries, or capacitors (for example, super capacitors). Optionally, the electrochemical apparatus 100 may be a secondary lithium battery, including a secondary lithium metal battery, a secondary lithium-ion battery, a secondary lithium polymer battery, or a secondary lithium-ion polymer battery.

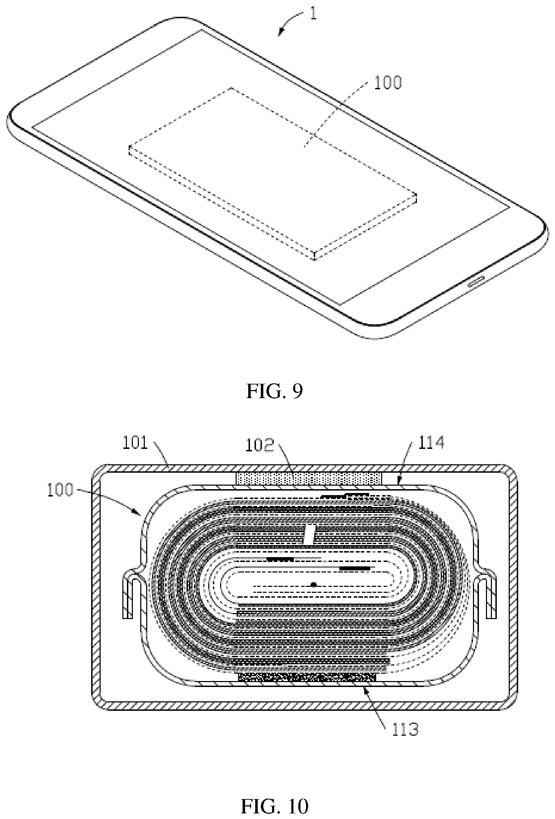

Referring to FIGs. 9 and 10, an embodiment of this application further provides an electronic apparatus 1, the electronic apparatus 1 including a battery compartment 101 and an electrochemical apparatus 100 disposed within the battery compartment 101. The electronic apparatus 1 is powered by the electrochemical apparatus 100 described above, and the risk of fracture of the first conductive plate 30 in the electrochemical apparatus 100 is reduced, thereby improving the safety, reliability, and service life.

As shown in FIG. 10, in some embodiments, the electronic apparatus 1 further includes an adhesive layer 102, and the adhesive layer 102 bonds the second wall 114 and the battery compartment 101 of the electrochemical apparatus 100. The adhesive layer 102 is used to secure the electrochemical apparatus 100 within the battery compartment 101, thereby reducing the occurrence of movement of the electrochemical apparatus 100 within the battery compartment 101 under mechanical abuse. In some embodiments, the material of the adhesive layer 102 is selected from at least one of polypropylene, polyethylene, polyethylene terephthalate, polyethylene naphthalene dicarboxylate, polypropylene-modified material, or polyethylene-modified material. The adhesive layer 102 may specifically be a double-sided adhesive or a hot melt adhesive.

The electrochemical apparatus 100 of this application is applicable to the electronic apparatuses 1 in various fields. In an embodiment, the electronic apparatus 1 of this application may be but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a backup power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

Specific examples and comparative examples below are used to describe the performance of the electrochemical apparatus provided in this application. This application is described by using the lithium-ion pouch battery as an example of the electrochemical apparatus and with reference to specific preparation procedures and test methods. A person skilled in the art should understand that a preparation method described in this application is only an example, and that all other suitable preparation methods fall within the scope of this application.

### Example 1

Preparation of a first electrode plate 21: Artificial graphite as a negative electrode active material, conductive carbon black (Super P), and styrene-butadiene rubber (SBR) were mixed at a weight ratio of 96:1.5:2.5, and deionized water was added as a solvent to prepare a slurry with a weight percentage of 70wt%, and the slurry was well stirred. The slurry was uniformly applied on one surface of a copper foil with a thickness of 10 µm and dried at 110°C so as to obtain a first active material layer 211 with a thickness of 150 µm. The above steps were repeated on another surface of the copper foil to obtain a second active material layer 212 with a thickness of 150 µm. A first conductive plate 30 was welded on a blank zone 2100 of the first electrode plate 21, where the first conductive plate 30 was made of nickel (Ni).

Preparation of a second electrode plate 22: Lithium cobalt oxide (LiCoO₂) as a positive electrode active material, conductive carbon black (Super P), and polyvinylidene fluoride (PVDF) were mixed at a weight ratio of 97.5:1.0:1.5, and N-methylpyrrolidone (NMP) was added as a solvent to prepare a slurry with a solid content of 75wt%, and the slurry was well stirred. The slurry was uniformly applied on one surface of an aluminum foil with a thickness of 12 µm and dried at 90°C so as to obtain a third active material layer 221 with a thickness of 100 µm. The above steps were repeated on another surface of the aluminum foil to obtain a fourth active material layer 222 with a thickness of 100 µm. A second conductive plate 40 was welded on a blank zone of the second electrode plate 22, where the second conductive plate 40 was made of aluminum (Al).

Preparation of an electrolyte: In an atmosphere of dry argon, first, organic solvent ethylene carbonate (EC), ethyl methyl carbonate (EMC), and diethyl carbonate (DEC) were mixed at a mass ratio of EC:EMC:DEC = 30:50:20, and then lithium hexafluorophosphate (LiPF₆) was added to the organic solvent for dissolution and well mixed, to obtain an electrolyte with a lithium salt concentration of 0.8 mol/L.

Preparation of a lithium-ion battery: a first insulation adhesive 50 and a second insulation adhesive 60 were connected to the first conductive plate 30 and the second conductive plate 40, respectively. In a first direction X, the length of a first layer 51 of the first insulation adhesive 50 is 5 mm, and the length of a second layer 52 is 6 mm. To be specific, in this example, the second layer 52 was extended along the first direction X, so that the length of the second layer 52 beyond the first layer 51 (that is, the length L0 of the first region 521) was 1 mm. Next, the first electrode plate 21, the separator 23, and the second electrode plate 22 were sequentially stacked and wound to obtain the electrode assembly 20, and a polyethylene (PE) film with a thickness of 15 µm was selected as the separator 23. The pit-formed aluminum-plastic film (with a thickness of 150 µm) was placed in an assembly fixture with the pit side facing up, and the electrode assembly 20 was placed in the pit. Electrolyte was injected into the pit of the aluminum-plastic film, and the first conductive plate 30 and the second conductive plate 40 were led out of the aluminum-plastic film. Then, formation and sealing were carried out to form a housing 10, and a first sealing portion 121 of the housing 10 was bent towards the first junction C1 to obtain the lithium-ion battery.

### Example 2

The difference from Example 1 was that the length of the second layer 52 in the first direction X was 7 mm and the length L0 of the first region 521 was 2 mm.

### Example 3

The difference from Example 1 was that the length of the second layer 52 in the first direction X was 8 mm and the length L0 of the first region 521 was 3 mm.

### Example 4

The difference from Example 1 was that the length of the second layer 52 in the first direction X was 5.5 mm and the length L0 of the first region 521 was 0.5 mm.

### Comparative Example 1

The difference from Example 1 was that the lengths of both the first layer 51 and the second layer 52 were 5 mm.

### Comparative Example 2

The difference from Example 2 was that the positions of the first layer 51 and the second layer 52 in Example 2 are swapped to obtain the Comparative Example 2.

Then, 10 batteries of each of the examples and comparative examples were subjected to drop tests, and the corresponding test results were recorded in Table 1. The drop test procedure included: (1) placing the battery in a fixture; (2) conducting roller tests in a roller with a height of 0.5 m for a total of 5000 cycles; (3) after 2500 cycles, measuring and recording the battery voltage, checking the appearance of the battery, and stopping the drop test if leakage or ignition occurs; and (4) if no abnormalities are found, continuing the remaining 2500 cycles of roller tests, and after the tests are complete, measuring and recording the voltage to determine the occurrence of fracture of first conductive plate 30.

**Table 1**

| | Length of first layer | Length of second layer | L0 | Test pass rate |
|---|---|---|---|---|
| Example 1 | 5 mm | 6 mm | 1 mm | 10/10 |
| Example 2 | 5 mm | 7 mm | 2 mm | 10/10 |
| Example 3 | 5 mm | 8 mm | 3 mm | 10/10 |
| Example 4 | 5 mm | 5.5 mm | 0.5 mm | 4/10 |
| Comparative Example 1 | 5 mm | 5 mm | 0 mm | 3/10 |
| Comparative Example 2 | 7 mm | 5 mm | 2 mm | 3/10 |

| | | | | |
|---|---|---|---|---|
| Note: The pass rate X/10 indicates that X out of the 10 samples have passed the drop test. | | | | |

From the data in Table 1, it can be seen that compared to Comparative Example 1, Examples 1 to 4, extending the second layer 52 of the first insulation adhesive 50, can reduce the occurrence of fracture of the first conductive plate 30 and increase the pass rate of the battery drop test. From Comparative Example 2, it can be seen that swapping the positions of the first layer 51 and the second layer 52 of the first insulation adhesive 50 in Example 2 does not reduce the occurrence of fracture of the first conductive plate 30. Different from that in Example 4, the first region 521 in Examples 1 to 3 has a length L0 greater than or equal to 1 mm, resulting in a higher pass rate of the battery drop test.

Finally, it should be noted that the foregoing embodiments are merely intended to describe the technical solutions of this application, but not intended to constitute any limitation. Although this application is described in detail with reference to preferred embodiments, persons of ordinary skill in the art should understand that modifications or equivalent replacements can be made to the technical solutions of this application, without departing from the scope of the technical solutions of this application.

## Claims

1. An electrochemical apparatus comprising a housing, an electrode assembly, and a first conductive plate, the housing comprising a main body portion and a sealing structure connected to the main body portion, the electrode assembly being provided within the main body portion, and the first conductive plate being electrically connected to the electrode assembly, wherein
a direction in which the first conductive plate protrudes out of the electrode assembly is defined as a first direction, a thickness direction of the electrode assembly is defined as a second direction, and a direction perpendicular to the first direction and the second direction is defined as a third direction; the main body portion comprises a first end wall and a second end wall disposed opposite each other in the first direction, a first wall and a second wall disposed opposite each other in the second direction, and a first side wall and a second side wall disposed opposite each other in the third direction; the sealing structure comprises a first sealing portion connected to the first end wall and a second sealing portion connected to the first side wall, and the first conductive plate protrudes out of the housing from the first sealing portion; and the first sealing portion is folded in a direction towards the first wall, and/or the second sealing portion is folded in a direction towards the first wall;
the first conductive plate comprises a first surface and a second surface disposed opposite each other in the second direction, wherein the first surface within the main body portion faces the first wall, and the second surface within the main body portion faces the second wall; and
the electrochemical apparatus further comprises an insulation adhesive, wherein the insulation adhesive sealingly connects the first conductive plate and the first sealing portion, and the insulation adhesive comprises a first layer and a second layer, the first layer being connected to the first surface, and the second layer being connected to the second surface; the second layer comprises a first region and a second region connected in the first direction; and viewed from the second direction, within the main body portion, the second region overlaps with the first layer, and the first region extends beyond the first layer from the second region towards the electrode assembly.

2. The electrochemical apparatus according to claim 1, wherein the electrode assembly comprises a first electrode plate, the first electrode plate comprises a first current collector and a first active material layer stacked, the first current collector comprises a blank zone uncovered by the first active material layer, and the first conductive plate is welded to the blank zone.

3. The electrochemical apparatus according to claim 2, wherein the first region is separated from the first electrode plate along the first direction.

4. The electrochemical apparatus according to claim 1, wherein width W1 of the first region is smaller than width W2 of the second region in the third direction.

5. The electrochemical apparatus according to claim 4, wherein 2 mm ≤ W2 - W1 ≤ 5 mm.

6. The electrochemical apparatus according to claim 4, wherein in the third direction, the first region comprises a first side and a second side disposed opposite each other, a distance between the first side and the first conductive plate is L1, and a distance between the second side and the first conductive plate is L2, wherein 0.1 mm ≤ L1 ≤ 0.6 mm, and 0.1 mm ≤ L2 ≤ 0.6 mm.

7. The electrochemical apparatus according to claim 4, wherein in the third direction, the first region comprises a first side and a second side disposed opposite each other, and the second region comprises a third side connected to the first region, an arc angle being formed between the first side and the third side, and an arc angle being formed between the second side and the third side.

8. The electrochemical apparatus according to claim 1, wherein in the first direction, the first region has a length L0, wherein L0 ≥ 1 mm.

9. The electrochemical apparatus according to claim 8, wherein L0 ≤ 3 mm.

10. An electronic apparatus comprising a holding compartment, wherein the electronic apparatus further comprises the electrochemical apparatus according to any one of claims 1 to 9, the electrochemical apparatus being provided in the holding compartment.
